# EUROPEAN PATENT APPLICATION

(11) **EP 3 190 264 A2**
(43) Date of publication of application: **12.07.2017**
(21) Application number: 16201763.6
(22) Date of filing: 01.12.2016
(51) Int. Cl.: F01D 9/04, F01D 11/08, F01D 25/24

(54) **SHROUD SEGMENT WITH HOOK-SHAPED MICROCHANNELS**

(30) Priority: 16.12.2015 US 201514971585
(71) Applicant: General Electric Company, Schenectady, NY 12345 (US)
(72) Inventor: BENJAMIN, Marc Lionel, Greenville, SC 29615 (US); FOSTER, Gregory Thomas, Greenville, SC 29615 (US); BRUNT, Thomas James, Greenville, SC 29615 (US)
(74) Representative: Lee, Brenda

(57) **Abstract**

A shroud segment 40 for use in gas turbines, includes a body 42, leading edge 44, trailing edge 46, a first 48 and second 50 side edge, and a pair of opposed lateral sides 52,54 between the leading and trailing edges and the first and second side edges. A first lateral side 52 of the lateral sides interface with a cavity 56 having a cooling fluid. A second lateral side 54 interfaces with a hot gas flow path 47. A first channel 74 disposed within the body includes a first and second end portion. A second channel 86 is disposed within the body includes a third and fourth end portion. The first and second channels receive the cooling fluid from the cavity to cool the body. The first and fourth end portion have hook-shaped portions with free ends having a width greater than an adjacent portion coupled to the free end.

## Description

### BACKGROUND

The subject matter disclosed herein relates to gas turbine engines, and more specifically, to turbine shrouds for gas turbine engines.

A turbomachine, such as a gas turbine engine, may include a compressor, a combustor, and a turbine. Gases are compressed in the compressor, combined with fuel, and then fed into to the combustor, where the gas/fuel mixture is combusted. The high temperature and high energy exhaust fluids are then fed to the turbine along a hot gas path, where the energy of the fluids is converted to mechanical energy. High temperatures along the hot gas path can heat turbine compoments (e.g., turbine shroud), causing degradation of components.

### BRIEF DESCRIPTION

Certain embodiments commensurate in scope with the originally claimed subject matter are summarized below. These embodiments are not intended to limit the scope of the claimed subject matter, but rather these embodiments are intended only to provide a brief summary of possible forms of the subject matter. Indeed, the subject matter may encompass a variety of forms that may be similar to or different from the embodiments set forth below.

In a first embodiment, a shroud segment for use in a turbine section of a gas turbine engine, includes a body including a leading edge, a trailing edge, a first side edge, and a second side edge, a pair of opposed lateral sides between the leading and trailing edges and the first and second side edges. A first lateral side of the pair of opposed lateral sides interfaces with a cavity having a cooling fluid, and a second lateral side of the pair of opposed lateral sides interfaces with a hot gas flow path. A first channel is disposed within the body, where the first channel includes a first end portion and a second end portion. The first end portion is disposed adjacent the first side edge and the second end portion is disposed adjacent the second side edge. A second channel is disposed within the body, where the second channel includes a third end portion and a fourth end portion. The third end portion is disposed adjacent to the first side edge and the fourth end portion is disposed adjacent the second side edge. The first and second channels receive the cooling fluid from the cavity to cool the body, and a first portion of the first channel adjacent to the second end portion and a second portion of the second channel adjacent to the third end portion each have a first width in a first direction from the first side edge to the second side edge. The second end portion and the third end portion each have a second width in the first direction greater than the first width.

In a second embodiment, a gas turbine engine, includes a compressor, a combustion system, and a turbine section, including a casing, an outer shroud coupled to the outer casing, an inner shroud segment coupled to the outer shroud segment to form a cavity configured to receive a discharged cooling fluid from the compressor. The inner shroud segment includes a body including a leading edge, a trailing edge, a first side edge, and a second side edge, a pair of opposed lateral sides between the leading and trailing edges and the first and second side edges. A first lateral side of the pair of opposed lateral sides interface with the cavity, and a second lateral side of the pair of opposed lateral sides interfaces with a hot gas flow path. A plurality of channels is disposed within the body and extends from adjacent the first side edge to adjacent the second side edge, where each channel of the plurality of channels includes a first end portion having a hook-shaped portion and a second end portion. The plurality of channels are configured to receive a cooling fluid from the cavity to cool the body. A first portion of each channel of the plurality of channels adjacent a respective end portion has a first width in a first direction from the leading edge to the trailing edge, and the respective second end portion has a second width in the first direction greater than the first width.

In a third embodiment, a shroud segment for use in a turbine section of a gas turbine engine, includes a body including a leading edge, a trailing edge, a first side edge, a second side edge, and a pair of opposed lateral sides between the leading and trailing edges and the first and second side edges. A first lateral side of the pair of opposed lateral sides is configured to interface with a cavity having a cooling fluid, and a second lateral side of the pair of opposed lateral sides is configured to interface with a hot gas flow path. A plurality of channels is disposed within the body and extends from adjacent the first side edge to adjacent the second side edge, where each channel of the plurality of channels includes a first end portion having a hook-shaped portion and a second end portion. The plurality of channels are configured to receive a cooling fluid from the cavity to cool the body, and a first portion of each channel of the plurality of channels adjacent to a respective second end portion has a first width in a first direction from the leading edge to the trailing edge, and the respective second end portion has a second width in the first direction greater than the first width. The first portion of the first channel adjacent to the second end portion and a second portion of a second channel adjacent to a third end portion each have a first height in a fourth direction from the first lateral side to the second lateral side, and the second end portion and the third end portion each have a second height in the fourth direction greater than the first height. The second end portion and the third end portion are each configured to couple to a respective outlet passage extending to the second side edge and the first side edge respectively, where each respective outlet passage is configured to discharge cooling fluid from body of the inner shroud segment into the hot gas flow path. The respective outlet passages each have a third width, and the third width is less than both the first and second widths.

### BRIEF DESCRIPTION OF THE DRAWINGS

These and other features, aspects, and advantages of the present subject matter will become better understood when the following detailed description is read with reference to the accompanying drawings in which like characters represent like parts throughout the drawings, wherein:
FIG. 1 is a block diagram of an embodiment of a turbine system having a turbine shroud with cooling channels;
FIG. 2 is a perspective view of an embodiment of an inner turbine shroud segment coupled to an outer turbine shroud segment;
FIG. 3 is a bottom view (e.g., view of lateral side that is oriented toward a hot gas flow path) of an embodiment of an inner turbine shroud segment;
FIG. 4 is a top view (e.g., view of lateral side that interfaces with a cavity) of an embodiment of an inner turbine shroud segment;
FIG. 5 is a perspective cross-sectional view of an embodiment of a portion of the inner turbine shroud segment of FIG. 4, taken along line 5-5 (with inlet passages and channels shown in dashed lines);
FIG. 6 is a perspective view of an embodiment of a portion of an inner turbine shroud segment;
FIG. 7 illustrates a top view of an embodiment of the cooling channels having end portions with a rectangular shape;
FIG. 8 illustrates a top view of another embodiment of the cooling channels having end portions with a semi-spherical shape;
FIG. 9 illustrates a top view of another embodiment of the cooling channels having end portions with a conical shape;
FIG. 10 illustrates a side view depicting dimensions of the first and fourth end portions of the cooling channels;
FIG. 11 illustrates metal sinks disposed between lateral sides of the inner turbine shroud;
FIG. 12 illustrates an embodiment an outlet passage relative to the end portions of the cooling channels; and
FIG. 13 is a flow diagram illustrating a method of manufacturing an inner turbine shroud segment having cooling channels.

### DETAILED DESCRIPTION

One or more specific embodiments of the present subject matter will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present subject matter, the articles "a," "an," "the," and "said" are intended to mean that there are one or more of the elements. The terms "comprising," "including," and "having" are intended to be inclusive and mean that there may be additional elements other than the listed elements.

The present disclosure is directed to systems and methods for cooling components of a turbine (e.g., turbine shroud) disposed along a hot gas flow path. In particular, an inner turbine shroud includes a body that includes near surface channels (e.g., micro-channels) disposed on a lateral side oriented toward the hot gas flow path.

The cooling channels help to provide cooling at the side edges of the shroud body through the exit features. The exit features may include various suitable geometries (e.g., rectangular, spherical, semi-spherical, conical, elliptical) to meter the cooling fluid. As described herein, the exit feature has a width (and/or height) that is greater than the portion of the end portion adjacent the exit feature to enable alignment of the exit feature with the end portion. Plugging the exit features during manufacturing may reduce debris or other matter (e.g., grime, oil, lubricant) from entering the cooling channels, thereby improving the effective of the cooling channels.

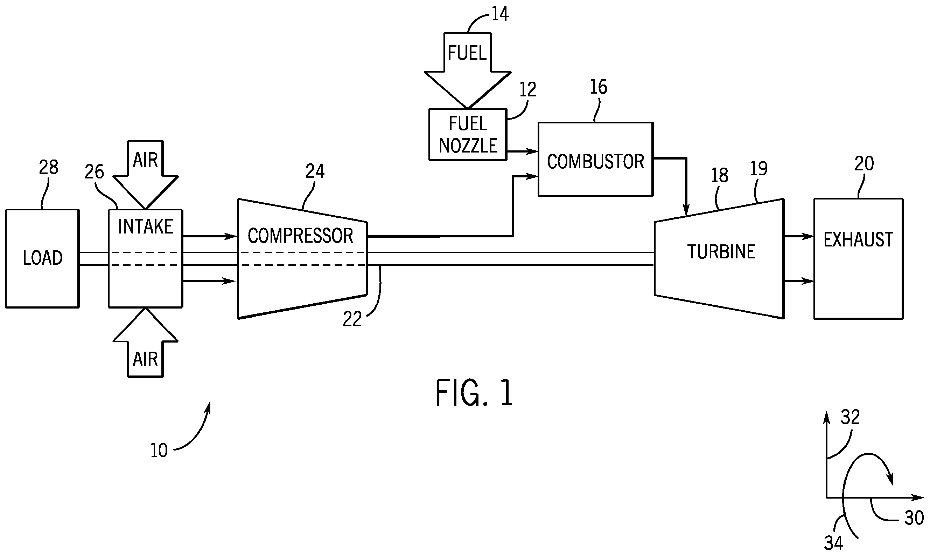

Turning to the drawings, FIG. 1 is a block diagram of an embodiment of a turbine system 10. As described in detail below, the disclosed turbine system 10 (e.g., a gas turbine engine) may employ a turbine shroud having cooling channels, described below, which may reduce the stress modes in the hot gas path components and improve the efficiency of the turbine system 10. The turbine system 10 may use liquid or gas fuel, such as natural gas and/or a hydrogen rich synthetic gas, to drive the turbine system 10. As depicted, fuel nozzles 12 intake a fuel supply 14, mix the fuel with an oxidant, such as air, oxygen, oxygen-enriched air, oxygen reduced air, or any combination thereof. Although the following discussion refers to the oxidant as the air, any suitable oxidant may be used with the disclosed embodiments. Once the fuel and air have been mixed, the fuel nozzles 12 distribute the fuel-air mixture into a combustor 16 in a suitable ratio for optimal combustion, emissions, fuel consumption, and power output. The turbine system 10 may include one or more fuel nozzles 12 located inside one or more combustors 16. The fuel-air mixture combusts in a chamber within the combustor 16, thereby creating hot pressurized exhaust gases. The combustor 16 directs the exhaust gases (e.g., hot pressurized gas) through a transition piece into a turbine nozzle (or "stage one nozzle"), and other stages of buckets (or blades) and nozzles causing rotation of a turbine 18 within a turbine casing 19 (e.g., outer casing). The exhaust gases flow toward an exhaust outlet 20. As the exhaust gases pass through the turbine 18, the gases force turbine buckets (or blades) to rotate a shaft 22 along an axis of the turbine system 10. As illustrated, the shaft 22 may be connected to various components of the turbine system 10, including a compressor 24. The compressor 24 also includes blades coupled to the shaft 22. As the shaft 22 rotates, the blades within the compressor 24 also rotate, thereby compressing air from an air intake 26 through the compressor 24 and into the fuel nozzles 12 and/or combustor 16. A portion of the compressed air (e.g., discharged air) from the compressor 24 may be diverted to the turbine 18 or its components without passing through the combustor 16. The discharged air (e.g., cooling fluid) may be utilized to cool turbine components such as shrouds and nozzles on the stator, along with buckets, disks, and spacers on the rotor. The shaft 22 may also be connected to a load 28, which may be a vehicle or a stationary load, such as an electrical generator in a power plant or a propeller on an aircraft, for example. The load 28 may include any suitable device capable of being powered by the rotational output of the turbine system 10. The turbine system 10 may extend along an axial axis or direction 30, a radial direction 32 toward or away from the axis 30, and a circumferential direction 34 around the axis 30. In an embodiment, hot gas components (e.g., turbine shroud, nozzle, etc.) are located in the turbine 18, where hot gases flow across the components causing creep, oxidation, wear, and thermal fatigue of the turbine components. The turbine 18 may include one or more turbine shroud segments (e.g., inner turbine shroud segments) having a cooling passages (e.g., near surface micro-channels) to enable control of the temperature of the hot gas path components (e.g., utilizing less cooling air than typical cooling systems for shrouds) to reduce distress modes in the components, to extend service life of the components (while performing their intended functions), reduce costs associated with operating the turbine system 10, and to improve the efficiency of the gas turbine system 10.

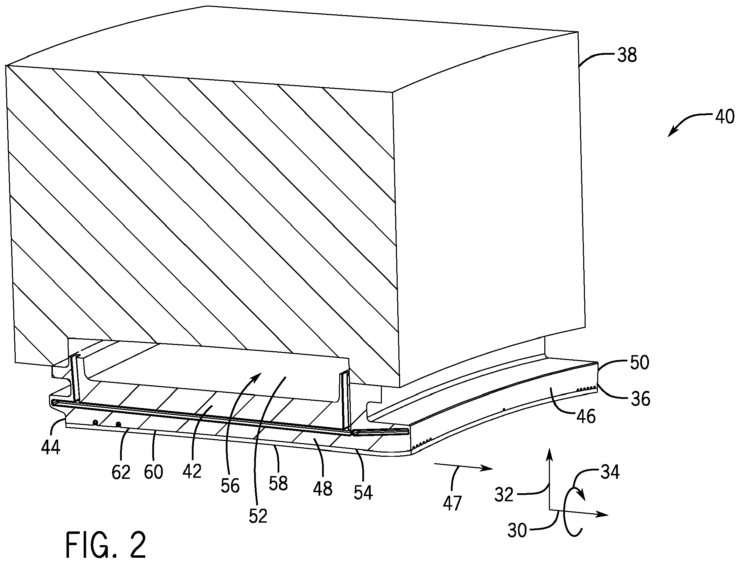

FIG. 2 is a perspective view of an embodiment of an inner turbine shroud segment 36 coupled to an outer turbine shroud segment 38 to form a turbine shroud segment 40. The turbine 18 includes multiple turbine shroud segments 40 that together form a respective ring about respective turbine stages. In certain embodiments, the turbine 18 may include multiple inner turbine shroud segments 36 coupled to respective outer turbine shroud segments 38 for each turbine shroud segment 40 disposed in the circumferential direction 34 about a rotational axis of the turbine 18 (and a turbine stage). In other embodiments, the turbine 18 may include multiple inner turbine shroud segments 38 coupled to the outer turbine shroud segment 38 to form the turbine shroud segment 40.

As depicted, the inner turbine shroud segment 40 includes a body 42 having an upstream or leading edge 44 and a downstream or trailing edge 46 that both interface with a hot gas flow path 47. The body 42 also includes a first side edge 48 (e.g., first slash face) and a second side edge 50 (e.g., second slash face) disposed opposite the first side edge 48 both extending between the leading edge 44 and the trailing edge 46. The body 42 further includes a pair of opposed lateral sides 52, 54 extending between the leading and trailing edges 44, 46 and the first and second side edges 48, 50. In certain embodiments, the body 42 (particularly, lateral sides 52, 54) may be arcuate shaped in the circumferential direction 34 between the first and second side edges 48, 50 and/or in the axial direction 30 between the leading and trailing edges 44, 46. The lateral side 52 is configured to interface with a cavity 56 defined between the inner turbine shroud segment 36 and the outer turbine shroud segment 38. The lateral side 54 is configured to be oriented toward the hot gas flow path 47 within the turbine 18.

As described in greater detail below, the body 42 may include multiple channels (e.g., cooling channels or micro-channels) disposed within the lateral side 54 to help cool the hot gas flow path components (e.g., turbine shroud 40, inner turbine shroud segment 36, etc.). A pre-sintered preform (PSP) layer 58 may be disposed on (e.g., brazed onto) the lateral side 54 so that a first surface 60 of the PSP layer 58 together with the body 42 defines (e.g., enclose) the channels and a second surface 62 of the PSP layer 58 interfaces with the hot gas flow path 47. The PSP layer 58 may be formed of superalloys and brazing material. In certain embodiments, as an alternative to the PSP layer 58 a non-PSP metal sheet may be disposed on the lateral side 54 that together with the body 42 defines the channels. In certain embodiments, the channels may be cast entirely within the body 42 near the lateral side 54. In certain embodiments, as an alternative to the PSP layer 58, a barrier coating or thermal barrier coating bridging may be utilized to enclose the channels within the body 42.

In certain embodiments, the body 42 includes hook portions to enable coupling of the inner turbine shroud turbine segment 36 to the outer turbine shroud segment 38. As mentioned above, the lateral side 52 of the inner turbine shroud segment 36 and the outer turbine shroud segment 38 define the cavity 56. The outer turbine shroud segment 38 is generally proximate to a relatively cool fluid or air (i.e., cooler than the temperature in the hot gas flow path 47) in the turbine 18 from the compressor 24. The outer turbine shroud segment 38 includes a passage (not shown) to receive the cooling fluid or air from the compressor 24 that provides the cooling fluid to the cavity 56. As described in greater detail below, the cooling fluid flows to the channels within the body 42 of the inner turbine shroud segment 36 via inlet passages disposed within the body 42 extending from the lateral side 52 to the channels. Each channel includes a first end portion that includes a hook-shaped portion having a free end and a second end portion. The second end portion may include a metering feature (e.g., a portion of the body 42 extending into the channel that narrow a cross-sectional area of a portion of the channel relative to the adjacent cross-sectional area of the channel) to regulate flow of the cooling fluid within the channel. In certain embodiments, each channel itself (excluding the second end portion) acts as a metering feature (e.g., includes a portion of the body 42 extending into the channel). In other embodiments, inlet passages coupled to the hook-shaped portion may include a metering feature (e.g., portion of the body 42 extending into the inlet passage). In certain embodiments, the channel itself, the second end portion, or the inlet passage, or a combination thereof includes a metering feature. In addition, the cooling fluid exits the channels (and the body 42) via the second end portions at the first side edge 48 and/or the second side edge 50. In certain embodiments, the channels may be arranged in an alternating pattern with a channel having the first end portion disposed adjacent the first side edge 48 and the second end portion disposed adjacent the second side edge 50, while an adjacent channel has the opposite orientation (i.e., the first end portion disposed adjacent the second side edge 50 and the second end portion disposed adjacent the first side edge 48). The hook-shaped portions of the channels provide a larger cooling region (e.g., larger than typical cooling systems for turbine shrouds) by increasing a length of cooling channel adjacent the slash faces while keeping flow at a minimum. In addition, the hook-shaped portion enables better spacing of the straight portions of the channels. The shape of the channels is also optimized to provide adequate cooling in the event of plugged channels. The disclosed embodiments of the inner turbine shroud segment may enable cooling of the inner turbine shroud segment with less air (e.g., than typical cooling systems for turbine shrouds) resulting in reduced costs associated with regards to chargeable air utilized in cooling.

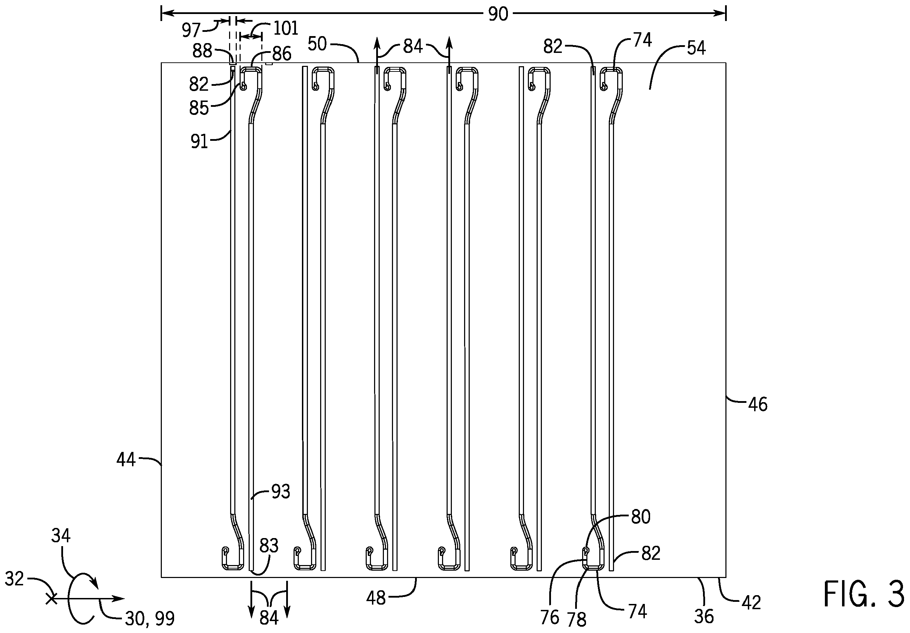

FIG. 3 is a bottom view (e.g., view of the lateral side 54 of the body 42 that is oriented toward hot gas flowpath) of an embodiment of the innerturbine shroud segment 36 without the PSP layer 58. As depicted, the body 42 includes a plurality of channels 74 (e.g., cooling channels or micro-channels) disposed within the lateral side 54. The body 42 may include 2 to 40 or more channels 74 (as depicted, the body 42 includes 23 channels 74). Each channel 74 is configured to receive a cooling fluid from the cavity 56. Each channel 74 includes a first end portion 76 that includes a hook-shaped portion 78 having a free end 80. Each hook-shaped portion 78 has a hook turn radius ranging from approximately 0.05 to 4 mm, 0.1 to 3 mm, 1.14 to 2.5 mm, and all subranges therebetween. As described in greater detail below, the free end 80 of each hook-shaped portion 78 is coupled to inlet passages that enable the channels 74 to receive the cooling fluid from the cavity 56. The curvature of the hook-shaped portion 78 enables more channels 74 to be disposed within the lateral side 54. In addition, the hook-shaped portion 78 provide a larger cooling region (e.g., larger than typical cooling systems for turbine shrouds) by increasing a length of cooling channel 74 adjacent the side edges 48, 50 while keeping flow at a minimum. In addition, the hook-shaped portion 78 enables better spacing of the straight portions of the channels 74. Further, the turning back of the hook-shaped portion 78 enables the straight portions of the channels to be uniformly distant from an adjacent channel to cook the main portion of the body 42 of the shroud segment 36. In certain embodiments, the hook-shaped portion 78 could be adjusted to enable the spacing of the straight portions of the channels 74 to be tighter packed for higher heat load zones. Overall, the shape of the channels 74 is also optimized to provide adequate cooling in the event of plugged channels 74. Each channel 74 also includes a second end portion 82 that enables the spent cooling fluid to exit the body 42 via the side edges 48, 50 via exit holes as indicated by the arrows 84. In certain embodiments, the second end portion 82 includes a metering feature configured to regulate (e.g., meter) a flow of the cooling fluid within the respective channel 74. In certain embodiments, each channel 74 may form a segmented channel at the second end portion 82. In particular, a bridge portion of the body 42 may extend across each channel 74 (e.g., in a direction from the leading edge 44 to the trailing edge 46) within the second end portion 82 with a portion of the channel 74 upstream of the bridge portion and a portion of the channel 74 downstream of the bridge portion. A passage may extend underneath the bridge portion fluidly connecting the portions of the channel 74 upstream and downstream of the bridge portion. In certain embodiments, each channel 74 itself (excluding the second end portion 82) acts as a metering feature (e.g., includes a portion of the body 42 extending into the channel). In other embodiments, inlet passages coupled to the hook-shaped portion 78 may include a metering feature (e.g., portion of the body 42 extending into the inlet passage). In certain embodiments, the channel 74 itself, the second end portion 82, or the inlet passage, or a combination thereof includes a metering feature.

As depicted, some of the channels 74 (e.g., channel 86) include the hook-shaped portion 78 of the first end portion 76 disposed adjacent the side edge 50 and the second end portion 82 disposed adjacent the side edge 48, while some of the channels 74 (e.g., channel 88) include the hook-shaped portion 78 of the first end portion 76 disposed adjacent the side edge 48 and the second end portion 82 disposed adjacent the side edge 50. In certain embodiments, the channels 74 are disposed in an alternating pattern (e.g., channels 86, 88) with one channel 74 having the hook-shaped portion 78 disposed adjacent one side edge 48 or 50 and the second end portion 82 (e.g., in certain embodiments having the metering feature) disposed adjacent the opposite side edge 48 or 50 with the adjacent channel 74 having the opposite orientation. As depicted, the channels 74 extend between the side edges 48, 50 from adjacent the leading edge 44 to adjacent the trailing edge 46. In certain embodiments, the channels 74 may extend between the side edges 48, 50 covering approximately 50 to 90 percent, 50 to 70 percent, 70 to 90 percent, and all subranges therein, of a length 90 of the body 42 between the leading edge 44 and trailing edge 46. For example, the channels 74 may extend between the side edges 48, 50 covering approximately 50, 55, 60, 65, 70, 75, 80, 85, or 90 percent of the length 90. This enables cooling along both of the side edges 48, 50 as well as cooling across a substantial portion of the body 42 (in particular, the lateral side 54 that is oriented toward the hot gas flow path 47) between both the leading edge 44 and the trailing edge 46 and the side edges 48, 50.

The shroud 42 may include multiple cooling channels 74. For example, the illustrated embodiment depicts a first channel 86 and a second channel 88. The first channel 86 includes a first end portion 76 and a second end portion 82. The first end portion 76 may be disposed adjacent the first side edge 48, and the second end portion 78 is disposed adjacent the second side edge 50. The second channel 88 is disposed within the shroud body 42 and includes a third end portion 83 and a fourth end portion 85. The third end portion 83 is disposed adjacent the first side edge 48, and the fourth end portion 85 is disposed adjacent the second side edge 50. The first and second channels 86, 88 receive a cooling fluid (e.g., air) from the cavity formed between the first lateral side 52 and the second lateral side 54. The cooling fluid cools the shroud body 42 as it flows through the cooling channels 74.

The first cooling channel 86 and the second cooling channel 88 have end portions. The first cooling channel 86 may have a first portion 91, which is adjacent to the second end portion 82. The second cooling channel 88 may have a second portion 93 adjacent to the third end portion 83. Both the first portion 91 and the second portion 93 may have a first width 97 in a first direction 99 from the first side edge 48 to the second side edge 50. The second end portion 82 and the third end portion 83 include a second width 101 in the first direction 99 where the second width 101 is greater than the first width 97.

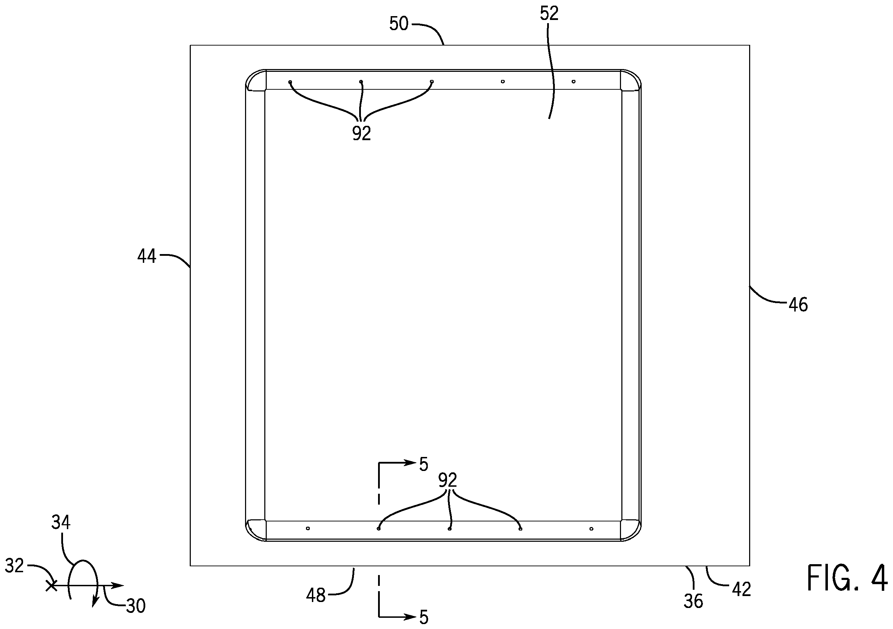

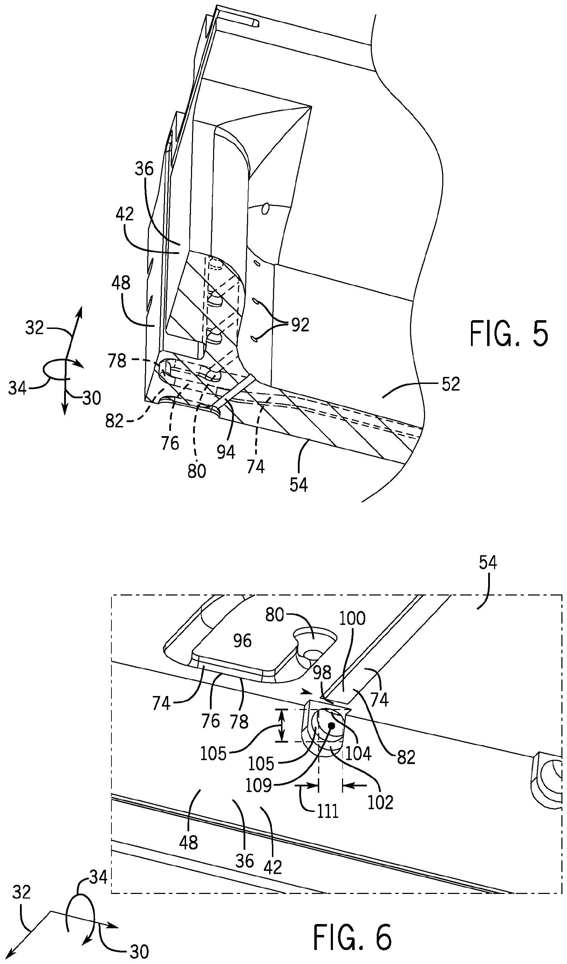

FIG. 4 is a top view (e.g., view of the lateral side 52 that interfaces with the cavity 56) of an embodiment of the inner turbine shroud segment 36. As depicted, the body includes a plurality of opening or apertures 92 that enable cooling fluid to flow from the cavity 56 into the channels 74 via inlet passages. FIG. 5 is a perspective cross-sectional view of an embodiment of the inner turbine shroud segment 36 of FIG. 4, taken along line 5-5. As depicted, inlet passages 94 (shown in dashed lines) extend generally in the radial direction 32 from the free ends 80 of the hook-shaped portions 78 of the channels 74 to the lateral side 52 to enable the flow of cooling fluid into the channels 74. In certain embodiments, the inlet passages 94 may be angled relative to the lateral side 54. For example, an angle of the inlet passages 94 may range between approximately 45 and 90 degrees, 45 and 70 degrees, 70 and degrees, and all subranges therein.

FIG. 6 is a perspective view of a portion of an embodiment of the inner turbine shroud segment 36 (e.g., without the PSP layer 58) illustrating a segmented channel 96 for the second end portion 82 of the channel 74. In certain embodiments, the second end portion 82 includes a metering feature (e.g., bridge portion 98) configured to regulate (e.g., meter) a flow of the cooling fluid within the respective channel 74. In particular, the bridge portion 98 of the body 42 may extend across each channel 74 (e.g., in a direction (e.g., axial direction 30) from the leading edge 44 to the trailing edge 46) within the second end portion 82 to form the segmented 96 with a portion 100 of the channel 74 upstream of the bridge portion 98 and a portion 102 of the channel 74 downstream of the bridge portion 98. The bridge portion 98 may also extend partially into the channel 74 in the radial direction 32. A passage 104 may extend underneath the bridge portion 98 fluidly connecting the portions 100, 102 of the channel 74 upstream and downstream of the channel 74 to enable cooling fluid to exit via exit holes 105. In certain embodiments, each channel 74 itself (excluding the second end portion 82) acts as a metering feature (e.g., includes a portion of the body 42 extending into the channel). In other embodiments, inlet passages 94 coupled to the hook-shaped portion 78 may include a metering feature (e.g., portion of the body 42 extending into the inlet passage). In certain embodiments, the channel 74 itself, the second end portion 82, or the inlet passage 94, or a combination thereof includes a metering feature.

The second end portion 82 and the third end portion 83 are configured to couple to a respective outlet passage extending 109 in a radial direction 32 to the second lateral side 52. Each of the outlet passages 109 discharges the cooling fluid from the shroud body 42 of the inner shroud segment 36 into the hot gas flow path. In some embodiments, the respective outlet passages have a third width 111. The third width 111 may be smaller than the first width 97 and the second width 101.

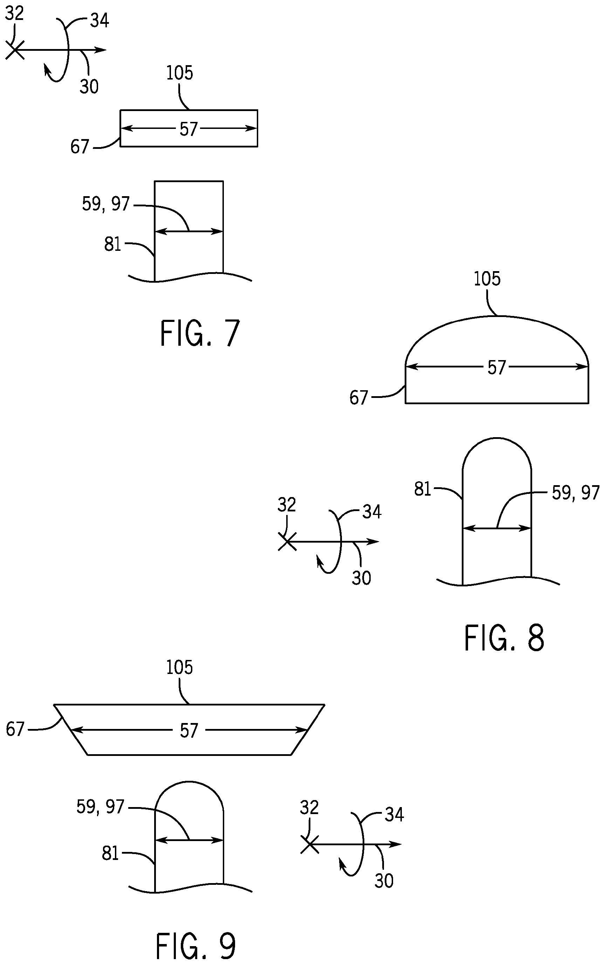

FIGS. 7-9 depict various embodiments (e.g., geometries) of the end portions 81 (e.g., second end portion 82, third end portion 83). FIG. 7 illustrates an embodiment of the end portion 81 of the cooling channels 74. In the illustrated embodiment, the second end portion 82 and the third end portion 83 are shaped so that they are rectangular. In the illustrated embodiment, the first width 97 may decrease in the radial direction 32 from the second lateral side 54 to the first lateral side 52. In other embodiments, the first width 97 may be constant in the radial direction 32 from the second lateral side 54 to the first lateral side 52. A width 57 of an exit feature 67 adjacent to the end portion 81 may be greater than a width 59 of the end portion 81 in the axial direction 30. The larger width 57 of the exit feature 67 may enable the end portion 81 to align more easily with the exit feature 67.

FIG. 8 illustrates an embodiment of the end portion 82 of the cooling channels 74. In the illustrated embodiment, the second end portion 82 and the third end portion 83 are shaped so that a semi-spherical shape is formed. In the illustrated embodiment, the first width 97 increases in the radial direction 32 from the first lateral side 52 to the second lateral side 54. The width 57 of the exit feature 67 adjacent to the end portion 81 may be greater than the width 59 of the end portion 81 in the axial direction 30. The larger width 57 of the exit feature 67 may enable the end portion 81 to align more easily with the exit feature 67.

FIG. 9 illustrates an embodiment of the end portion 82 of the cooling channels 74. In the illustrated embodiment, the second end portion 82 and the third end portion 83 are shaped so that a conical shape is formed. In the illustrated embodiment, the first width 97 is increases in the radial direction 32 from the first lateral side 52 to the second lateral side 54. The width 57 of the exit feature 67 adjacent to the end portion 81 may be greater than the width 59 of the end portion 81 in the axial direction 30. The larger width 57 of the exit feature 67 may enable the end portion 81 to align more easily with the exit feature 67.

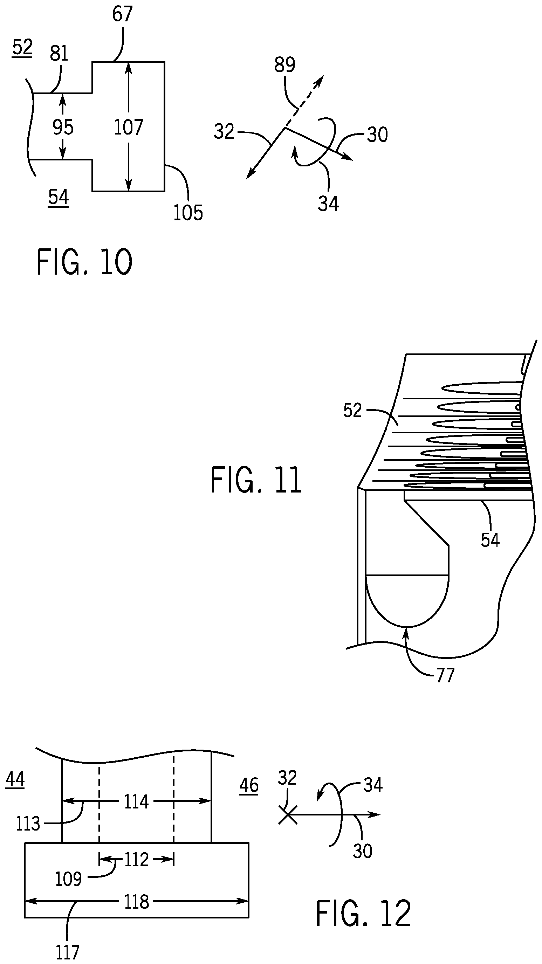

FIG. 10 illustrates a side view depicting the dimensions of end portions 81 of the cooling channels 74. The end portions 81 are depicted having a first height 95. In some embodiments, the first height 95 extends in a fourth direction 89 from the first lateral side 52 to the second lateral side 54. The first height 95 may be smaller than a second height 107 associated with the exit feature 67.

FIG. 11 illustrates metal sinks 77 disposed between the first lateral side 52 and the second lateral side 54. The metal sinks 77 may be disposed between the first lateral side 52 and the second lateral side 54 adjacent to the end portions (e.g., 76, 82, 83, 85) of the cooling passages 74. The metal sinks 77 may extend in the fourth direction 89 from the first lateral side 52 to the second lateral side 54. In some embodiments, respective metal sinks 77 may extend in the fourth direction 89 beyond the second lateral side 54.

FIG. 12 illustrates a top view of an embodiment depicting the dimensions of the end portions of the cooling channels 74. In the illustrated embodiment, the channel 74 includes an end portion 82, 83 having a hole 113 disposed at the end formed via electric discharge machining. The hole 113 may have a width 114 ranging from about 0.1 cm to 0.2 cm, about 0.102 cm to 0.179 cm, about 0.115 cm to 160 cm, and all subranges therebetween. A metering hole (e.g., outlet passage 109) may have a width 112 from about 0.14 cm to 0.220 cm, about 0.179 cm to 0.245 cm, about 0.190 to about 0.230 cm, and all subranges therebetween. A target feature 117 of the free end 80 may have a width 118 ranging from about 0.113 cm to 0.223 cm, and all subranges therebetween.

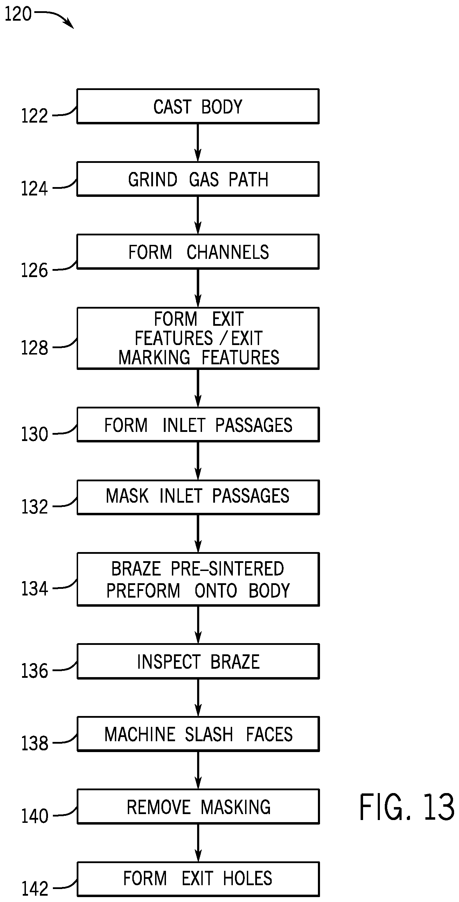

FIG. 13 is a flow chart of an embodiment of a method 120 for manufacturing the inner turbine shroud segment 36. The method 120 includes casting the body 42 (block 122). The method 120 also includes grinding a gas path surface onto to the body 42 (block 124). In particular, the lateral side 54 that is configured to be oriented toward the hot gas flow path 47 may be grinded into an arcuate shape in the circumferential direction 34 between the first and second side edges 48, 50 and/or in the axial direction 30 between the leading and trailing edges 44, 46. The method 120 further includes forming (e.g., machining, electrical discharge machining) the channels 74 into the lateral side 54 of the body 42 (block 126). The method 120 yet further includes forming (e.g., machining, electrical discharge machining, etc.) the exit features or exit marking features (e.g., bridge portion 102) that indicate where exits holes 105 should be drilled or electrical discharge machined in the second end portion 82 of the channels 74 (block 128). The method 120 still further includes forming (e.g., machining, electrical discharge machining, etc.) the inlet passages 94 from the lateral 52 to the free ends 80 of the hook-shaped portions 78 of the first end portions 76 of the channels 74 (block 130). The method 120 includes masking the openings or apertures 92 of the inlet passages 94 (block 132) to block debris from getting within the channels 74 during manufacture of the inner turbine shroud segment 36. The method 120 includes brazing the PSP layer 58 onto the lateral side 54 (block 134) so that the first surface 60 of the PSP layer 58 together with the body 42 defines (e.g., encloses) the channels 74 and the second surface 62 of the PSP layer 58 interfaces with the hot gas flow path 47. In certain embodiments, as an alternative to the PSP layer 58 a non-PSP metal sheet may be disposed on the lateral side 54 that together with the body 42 defines the channels 74. In certain embodiments, as an alternative to the PSP layer 58, a barrier coating or thermal barrier coating bridging may be utilized to enclose the channels 74 within the body 42. The method 120 also includes inspecting the brazing the of the PSP layer 58 to the body 42 (block 136). The method 120 yet further includes machining the slash faces (e.g., side edges 48, 50) (block 138). The method 120 still further includes removing the masking from the openings 92 of the inlet passages 94 (block 140). The method 120 even further includes forming (e.g., machining, electrical discharge machining, etc.) the exit holes 105 of the second end portions 82 of the channels 74 to enable the cooling fluid to exit the side edges 48, 50 (block 142). In certain embodiments, the channels 74, the metering features, and the inlet passages 94 may be cast within the body 42.

Technical effects of the disclosed embodiments include using multiple cooling channels machined into a turbine shroud to improve flow of cooling fluids to the shroud and space between adjacent shrouds. The cooling channels may be formed on either side of a shroud body (e.g., inner shroud segment or outer shroud segment). The shroud may include multiple cooling channels (e.g., a first channel with a first end portion and a second end portion, a second channel with a third end portion and a fourth end portion). The end portions (e.g., the second end portion and the third end portions) include exit features (e.g., exit holes) for metering cooling fluids received from a cavity out of the cooling channels. The exit features may include various suitable geometries (e.g., rectangular, spherical, semi-spherical, conical, elliptical) to meter the cooling fluid. The exit features has a width (and/or height) that is greater than the portion of the end portion adjacent the exit feature to enable alignment of the exit feature with the end portion.

This written description uses examples to disclose the subject matter and also to enable any person skilled in the art to practice the subject matter, including making and using any devices or systems and performing any incorporated methods. The patentable scope of the subject matter is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A shroud segment for use in a turbine section of a gas turbine engine, comprising:
   a body including a leading edge, a trailing edge, a first side edge, a second side edge, and a pair of opposed lateral sides between the leading and trailing edges and the first and second side edges, wherein a first lateral side of the pair of opposed lateral sides is configured to interface with a cavity having a cooling fluid, and a second lateral side of the pair of opposed lateral sides is configured to interface with a hot gas flow path;
   a first channel disposed within the body, wherein the first channel comprises a first end portion and a second end portion, the first end portion is disposed adjacent the first side edge and the second end portion is disposed adjacent the second side edge; and
   a second channel disposed within the body, wherein the second channel comprises a third end portion and a fourth end portion, the third end portion is disposed adjacent the first side edge and the fourth end portion is disposed adjacent the second side edge; and
   wherein the first and second channels are configured to receive the cooling fluid from the cavity to cool the body, and a first portion of the first channel adjacent to the second end portion and a second portion of the second channel adjacent to the third end portion each have a first width in a first direction from the leading edge to the trailing edge, and wherein the second end portion and the third end portion each have a second width in the first direction greater than the first width.
2. The shroud segment of clause 1, wherein the second width is constant in a second direction from the first lateral side to the second lateral side.
3. The shroud segment of any preceding clause, wherein the second and third end portions comprises a rectangular shape.
4. The shroud segment of any preceding clause, wherein the second width for the second end portion decreases in a second direction from the first lateral side edge to the second lateral side edge, and the second width for the third end portion decreases in a third direction from the second lateral side edge to the first lateral side edge.
5. The shroud segment of any preceding clause, wherein the second and third end portions comprises a semi-spherical shape.
6. The shroud segment of any preceding clause, wherein second width increases in a second direction from the first lateral side to the second lateral side.
7. The shroud segment of any preceding clause, wherein the second and third end portions comprises a conical shape.
8. The shroud segment of any preceding clause, wherein the second and third end portions each comprise a metal sink that extends in a fourth direction from the first lateral side to the second lateral side, and the respective metal sinks extend in the fourth direction beyond the second lateral side.
9. The shroud segment of any preceding clause, wherein the first portion of the first channel adjacent to the second end portion and the second portion of the second channel adjacent to the third end portion each have a first height in a fourth direction from the first lateral side to the second lateral side, and wherein the second end portion and the third end portion each have a second height in the fourth direction greater than the first height.
10. The shroud segment of any preceding clause, wherein the second and third end portions extend further into the body in the fourth direction than the first and second portions.
11. The shroud segment of any preceding clause, wherein the second end portion and the third end portion is each configured to couple to a respective outlet passage extending to the second side edge and the first side edge respectively, wherein each respective outlet passage is configured to discharge cooling fluid from body of the inner shroud segment into the hot gas flow path.
12. The shroud segment of any preceding clause, wherein the respective outlet passages each have a third width, and the third width is less than both the first and second widths.
13. The shroud segment of any preceding clause, wherein the first and second channels and the respective outlet passages are electrical discharge machined into the body.
14. The shroud segment of any preceding clause, wherein the first end portion and the fourth end portion each comprises a hook-shaped portion having a free end.
15. A gas turbine engine, comprising:
   a compressor;
   a combustion system; and
   a turbine section, comprising:
      a casing;
      an outer shroud coupled to the outer casing;
      an inner shroud segment coupled to the outer shroud segment to form a cavity configured to receive a discharged cooling fluid from the compressor, wherein the inner shroud segment comprises:
   a body including a leading edge, a trailing edge, a first side edge, a second side edge, and a pair of opposed lateral sides between the leading and trailing edges and the first and second side edges, wherein a first lateral side of the pair of opposed lateral sides is configured to interface with the cavity, and a second lateral side of the pair of opposed lateral sides is configured to interface with a hot gas flow path;
      a plurality of channels disposed within the body and extending from adjacent the first side edge to adjacent the second side edge, wherein each channel of the plurality of channels comprises a first end portion having a hook-shaped portion and a second end portion; and
   wherein the plurality of channels are configured to receive a cooling fluid from the cavity to cool the body, and wherein a first portion of each channel of the plurality of channels adjacent to a respective second end portion has a first width in a first direction from the leading edge to the trailing edge, and the respective second end portion has a second width in the first direction greater than the first width.
16. The gas turbine engine of any preceding clause, wherein the second width is constant in a second direction from the first lateral side to the second lateral side.
17. The gas turbine engine of any preceding clause, wherein the second width for the second end portion decreases in a second direction from the first lateral side edge to the second lateral side edge, and the second width for the third end portion decreases in a third direction from the second lateral side edge to the first lateral side edge.
18. The gas turbine engine of any preceding clause, wherein the second width increases in a second direction from the first lateral side to the second lateral side.
19. The gas turbine engine of any preceding clause, wherein the first portion of the first channel adjacent to the second end portion and the second portion of the second channel adjacent to the third portion each have a first height in a fourth direction from the first lateral side to the second lateral side, and wherein the second end portion and the third end portion each have a second height in the fourth direction greater than the first height.
20. A shroud segment for use in a turbine section of a gas turbine engine, comprising:
   a body including a leading edge, a trailing edge, a first side edge, a second side edge, and a pair of opposed lateral sides between the leading and trailing edges and the first and second side edges, wherein a first lateral side of the pair of opposed lateral sides is configured to interface with a cavity having a cooling fluid, and a second lateral side of the pair of opposed lateral sides is configured to interface with a hot gas flow path;
   a plurality of channels disposed within the body and extending from adjacent the first side edge to adjacent the second side edge, wherein each channel of the plurality of channels comprises a first end portion having a hook-shaped portion and a second end portion; wherein the plurality of channels are configured to receive a cooling fluid from the cavity to cool the body, and wherein a first portion of each channel of the plurality of channels adjacent to a respective second end portion has a first width in a first direction from the leading edge to the trailing edge, and the respective second end portion has a second width in the first direction greater than the first width;
   wherein the first portion of the first channel adjacent to the second end portion and a second portion of a second channel adjacent to a third end portion each have a first height in a fourth direction from the first lateral side to the second lateral side, and wherein the second end portion and the third end portion each have a second height in the fourth direction greater than the first height;
   wherein the second end portion and the third end portion are each configured to couple to a respective outlet passage extending to the second side edge and the first side edge respectively, wherein each respective outlet passage is configured to discharge cooling fluid from body of the inner shroud segment into the hot gas flow path; and
   wherein the respective outlet passages each have a third width, and the third width is less than both the first and second widths.

## Claims

1. A shroud segment for use in a turbine section of a gas turbine engine, comprising:
a body including a leading edge, a trailing edge, a first side edge, a second side edge, and a pair of opposed lateral sides between the leading and trailing edges and the first and second side edges, wherein a first lateral side of the pair of opposed lateral sides is configured to interface with a cavity having a cooling fluid, and a second lateral side of the pair of opposed lateral sides is configured to interface with a hot gas flow path;
a first channel disposed within the body, wherein the first channel comprises a first end portion and a second end portion, the first end portion is disposed adjacent the first side edge and the second end portion is disposed adjacent the second side edge; and
a second channel disposed within the body, wherein the second channel comprises a third end portion and a fourth end portion, the third end portion is disposed adjacent the first side edge and the fourth end portion is disposed adjacent the second side edge; and
wherein the first and second channels are configured to receive the cooling fluid from the cavity to cool the body, and a first portion of the first channel adjacent to the second end portion and a second portion of the second channel adjacent to the third end portion each have a first width in a first direction from the leading edge to the trailing edge, and wherein the second end portion and the third end portion each have a second width in the first direction greater than the first width.

2. The shroud segment of claim 1, wherein the second width is constant in a second direction from the first lateral side to the second lateral side.

3. The shroud segment of claim 1, wherein the second width for the second end portion decreases in a second direction from the first lateral side edge to the second lateral side edge, and the second width for the third end portion decreases in a third direction from the second lateral side edge to the first lateral side edge.

4. The shroud segment of claim 1, wherein the second width increases in a second direction from the first lateral side to the second lateral side.

5. The shroud segment of any preceding claim, wherein the second and third end portions each comprise a metal sink that extends in a fourth direction from the first lateral side to the second lateral side, and the respective metal sinks extend in the fourth direction beyond the second lateral side.

6. The shroud segment of any preceding claim, wherein the first portion of the first channel adjacent to the second end portion and the second portion of the second channel adjacent to the third end portion each have a first height in a fourth direction from the first lateral side to the second lateral side, and wherein the second end portion and the third end portion each have a second height in the fourth direction greater than the first height.

7. The shroud segment of claim 2, wherein the second and third end portions extend further into the body in the fourth direction than the first and second portions.

8. The shroud segment of any preceding claim, wherein the second end portion and the third end portion is each configured to couple to a respective outlet passage extending to the second side edge and the first side edge respectively, wherein each respective outlet passage is configured to discharge cooling fluid from body of the inner shroud segment into the hot gas flow path.

9. The shroud segment of claim 8, wherein the respective outlet passages each have a third width, and the third width is less than both the first and second widths.

10. The shroud segment of claim 8 or 9, wherein the first and second channels and the respective outlet passages are electrical discharge machined into the body.

11. The shroud segment of any preceding claim, wherein the first end portion and the fourth end portion each comprises a hook-shaped portion having a free end.

12. A gas turbine engine, comprising:
a compressor;
a combustion system; and
a turbine section, comprising:
a casing;
an outer shroud coupled to the outer casing;
an inner shroud segment coupled to the outer shroud segment to form a cavity configured to receive a discharged cooling fluid from the compressor, wherein the inner shroud segment comprises:
a body including a leading edge, a trailing edge, a first side edge, a second side edge, and a pair of opposed lateral sides between the leading and trailing edges and the first and second side edges, wherein a first lateral side of the pair of opposed lateral sides is configured to interface with the cavity, and a second lateral side of the pair of opposed lateral sides is configured to interface with a hot gas flow path;
a plurality of channels disposed within the body and extending from adjacent the first side edge to adjacent the second side edge, wherein each channel of the plurality of channels comprises a first end portion having a hook-shaped portion and a second end portion; and
wherein the plurality of channels are configured to receive a cooling fluid from the cavity to cool the body, and wherein a first portion of each channel of the plurality of channels adjacent to a respective second end portion has a first width in a first direction from the leading edge to the trailing edge, and the respective second end portion has a second width in the first direction greater than the first width.

13. The gas turbine engine of claim 12, wherein the second width is constant in a second direction from the first lateral side to the second lateral side.

14. The gas turbine engine of claim 12, wherein the second width for the second end portion decreases in a second direction from the first lateral side edge to the second lateral side edge, and the second width for the third end portion decreases in a third direction from the second lateral side edge to the first lateral side edge.

15. The gas turbine engine of claim 12, wherein the second width increases in a second direction from the first lateral side to the second lateral side.
